# EUROPÄISCHE PATENTSCHRIFT

(11) **EP 1 553 009 B1**
(45) Veröffentlichungstag und Bekanntmachung des Hinweises auf die Patenterteilung: **06.10.2010**
(21) Anmeldenummer: 04105736.5
(22) Anmeldetag: 12.11.2004
(51) Int. Cl.: B62D 15/02

(54) **Parkassistent zum Parallel-Einparken**
Park-assistance for parallel parking
Assistance pour se garer en créneau

(30) Priorität: 07.01.2004 DE 102004001122
(43) Veröffentlichungstag der Anmeldung: 13.07.2005
(73) Patentinhaber: ROBERT BOSCH GMBH, 70442 Stuttgart (DE)
(72) Erfinder: Danz, Christian, 70469 Stuttgart (DE); Seiter, Michael, 71272 Renningen (DE); Lee, Wei-Chia, 71229 Leonberg (DE); Rossmeier, Markus, 56170 Benndorf (DE)

(56) Entgegenhaltungen:
- EP-A- 1 270 367
- WO-A-02/075251
- DE-A1- 3 813 083
- US-A- 5 450 057
- US-A1- 2002 041 239
- US-A1- 2002 128 750

## Beschreibung

### Technisches Gebiet

Die Erfindung betrifft einen Parkassistenten sowie ein Verfahren zum Bereitstellen von Informationen zum Parallel-Einparken mit den in den Oberbegriffen der Ansprüche 1 und 14 genannten Merkmalen.

### Stand der Technik

Die zunehmende Verkehrsdichte und verstärkte Bebauung freier Flächen engen den Verkehrsraum, insbesondere in Ballungszentren, kontinuierlich ein. Der zur Verfügung stehende Parkraum wird enger und die Suche nach einer geeigneten Parklücke belastet den Fahrer zusätzlich zum stetig steigenden Verkehrsaufkommen. Insbesondere beim rückwärtigen Einparken in eine Parklücke, ist es oft mit erheblichen Schwierigkeiten verbunden, die genaue Größe und Lage der Parklücke richtig einzuschätzen.

Für Kraftfahrzeuge sind Einparkassistenten bekannt, welche die Größe und Lage einer Parklücke bestimmen, und im Falle einer ausreichenden Parklücke die optimale Einfahrbahn (Einparktrajektorie oder Soll-Trajektorie) in Abhängigkeit von der gemessenen Parklückenlänge berechnen. Anschließend gibt das System dem Fahrer Hinweise für die optimale Lenkung, so dass er auf der berechneten Soll-Trajektorie bleibt und zügig in die Parklücke einfahren kann.

Um bei einem semiautonomen Einparkassistenten eine besonders effektive Ausgestaltung realisieren zu können, ist insbesondere eine vorteilhafte Gestaltung der Mensch-Maschine-Schnittstelle (HMI = Human Maschine Interface) erforderlich. Die Informationen zur optimalen Lenkung sollen dem Fahrer bestmöglich vermittelt werden, damit er nicht von der berechneten Soll-Trajektorie abkommt. Zusätzlich zum Lenkwinkel muss der Fahrer die Längsbewegung des Fahrzeuges kontrollieren und das Umfeld des Fahrzeuges überwachen.

Aus der DE 196 52 930 A1 ist eine Abstandswarnanlage, insbesondere ein Parkhilfesystem für Kraftfahrzeuge, mit einer akustischen Warneinrichtung bekannt, welche Warnsignale abgibt, sobald ein Hindernis in einem vorgegebenen Abstandsbereich gemessen wird, wobei die Warneinrichtung mit mindestens zwei in Abhängigkeit von der Lage des Hindernisses getrennt ansteuerbaren akustischen Sendern versehen ist, wobei die akustischen Sender über getrennte Kanäle gleichzeitig derart ansteuerbar sind, dass Lage und/oder Bewegung des von der Bedienperson des Fahrzeuges gehörten Tones einen Hinweis auf die Richtung gibt, in der sich das gemessene Hindernis befindet.

Nachteilhaft an den bekannten Vorrichtungen ist, dass diese keine Hinweise zum Einparken geben. Zwar wird dem Fahrer des Kraftfahrzeuges in Abhängigkeit des Abstandes zum nächsten Hindernis ein diesen Abstand kennzeichnender Signalton zur Verfügung gestellt, jedoch ändert sich dieser abstandsabhängige Signalton in Abhängigkeit der Einfahrgeschwindigkeit des Fahrzeuges unterschiedlich schnell, so dass der Fahrer des Fahrzeuges hierauf unterschiedlich schnell reagieren muss. Hinzu kommt, dass die Reaktionszeiten einzelner Fahrer auf die von den bekannten Vorrichtungen zur Einparkhilfe gegebenen Signalen sehr unterschiedlich sind, so dass zum Beispiel ein zu einem bestimmten Zeitpunkt gegebenes Stoppsignal aufgrund der unterschiedlichen Einparkgeschwindigkeiten der Fahrzeuge und der unterschiedlichen Reaktionszeiten der Fahrer zu unterschiedlichen Bremswegen der Fahrzeuge führen wird.

Aus der DE 38 13 083 A1 ist eine automatische Einparkvorrichtung für Kraftfahrzeuge bekannt. Hierbei wird eine Parklücke mittels Bewegungssensoren zum Messen der Bewegungsstrecke des Wagens und mittels Hindernissensoren zum Ermitteln der Position der Hindernisse um den Wagen herum vermessen. Im Anschluss werden Signale erzeugt, um den Fahrer anzuweisen, den Wagen vorzusetzen, zu stoppen, nach links oder rechts zu fahren oder zurückzusetzen, um den Wagen entlang einem berechneten Weg in die Parklücke einzuparken. Hierbei ist eine Anzeige vorgesehen, die einem Fahrer einen Abstand zu einem Hindernis anzeigt.

Aus der US 2002/0041239 A1 ist ein Parkhilfesystem bekannt, bei dem ein Fahrer eine Einparkunterstützung mittels einer Anzeige, aber auch mittels einer akustischen Warneinheit gegeben wird, über die der Fahrer eine Aufforderung zum Anhalten des Fahrzeugs erhält.

### Darstellung der Erfindung, Aufgabe, Lösung, Vorteile

Es ist daher Aufgabe der vorliegenden Erfindung, eine Vorrichtung und ein Verfahren zum Bereitstellen von Informationen zum Parallel-Einparken eines Fahrzeuges anzugeben, welche dem Fahrer ein optimales Einfahren in die Parklücke unabhängig von seiner Einfahrgeschwindigkeit und seiner Reaktionszeit ermöglichen.

Diese Aufgabe wird erfindungsgemäß gelöst durch die Merkmale im kennzeichnenden Teil des Anspruchs 1 (Verfahrensanspruch) und des Anspruchs 14 (Vorrichtungsanspruch) im Zusammenwirken mit den Merkmalen im Oberbegriff. Besonders vorteilhafte Ausgestaltungen sind in den Unteransprüchen enthalten.

Dadurch, dass die Fahrzeuggeschwindigkeit und/oder die Reaktionszeit des Fahrzeugführers bezüglich vorhergehender Signale ermittelt wird und in deren Abhängigkeit das Signal oder die Signale zur Kennzeichnung des verbleibenden Abstandes des Fahrzeuges zu einem nächsten Haltepunkt des Fahrzeuges erzeugt werden, kann beispielsweise ein Signal, welches dem Fahrer signalisiert, dass er das Fahrzeug anhalten soll, derart rechtzeitig gegeben werden, dass der Fahrer unter Berücksichtigung seiner Geschwindigkeit und seiner individuellen Reaktionszeit auf vorhergehende Signale das Fahrzeug rechtzeitig zum Halten bringt. Hierdurch wird eine Adaption eines Parkassistenten an das Fahrverhalten und das Reaktionsvermögen des Fahrers erzielt. Hierdurch wird es insbesondere ermöglicht, dass dem Fahrer des Fahrzeuges aufgrund der ihm bereitgestellten Informationen eine optimale Lenkung entlang der Soll-Trajektorie ermöglicht wird. Dies umfasst sowohl die Kontrolle der Längsbewegung des Fahrzeuges als auch die Kontrolle des Lenkwinkels, um das Fahrzeug auf der Soll-Trajektorie zu halten. Dabei ist die Soll-Trajektorie diejenige Einparkfahrbahn, welche durch einen (semiautonomen) Parkassistenten aufgrund von Größe und Lage einer Parklücke und der Lage des Fahrzeuges relativ zur Parklücke berechnet worden ist. Die Messung der Reaktionszeiten des Fahrers kann insbesondere durch Messung der Reaktionszeit des Fahrers bei Betätigung des Bremspedals bei einem vorgegebenen Signal zum Bremsen beziehungsweise der Reaktionszeit beim Anhalten des Fahrzeuges beziehungsweise bei Betätigung des Lenkrades durch den Fahrer bei einem vorgegebenen Lenkwinkel gemessen werden.

In einer besonders bevorzugten Ausführungsvariante ist es demnach vorgesehen, dass der Fahrzeuglenkwinkel bestimmt und mit dem errechneten Soll-Lenkwinkel der Soll-Trajektorie verglichen wird und bei Abweichung akustische und/oder optische Signale zur Kennzeichnung der Lenkrichtung erzeugt und ausgegeben werden. Ein besonderer Vorteil der Bereitstellung der Informationen in akustischer Form besteht darin, dass der Fahrer seinen Blick nicht von der Fahrzeugumgebung auf beispielsweise ein Display lenken muss, und somit die Ablenkung des Fahrers während des Einparkvorganges möglichst gering gehalten werden kann.

Mit Hilfe des vorbeschriebenen adaptiven Verfahrens beziehungsweise mit Hilfe einer adaptiven Vorrichtung kann der Fahrer die Stopppunkte und Lenkvorgaben des (semiautonomen) Parkassistenten besser einhalten als bei den Vorrichtungen nach dem Stand der Technik, wobei der Einsatz von Aktuatoren in Bremse und Lenkung (vollautonomer Parkassistent) vermieden werden kann.

In einer bevorzugten Ausführungsvariante wird als Signal zur Kennzeichnung des verbleibenden Abstandes zum nächsten Haltepunkt des Fahrzeuges eine abstandsabhängige Tonfolge, ein Tonsignal mit abstandsabhängiger Frequenz oder ein Tonsignal mit abstandsabhängigem Puls erzeugt. In einer alternativen, bevorzugten Ausführungsvariante wird als Signal zur Kennzeichnung des verbleibenden Abstandes zum nächsten Haltepunkt des Fahrzeuges ein Tonsignal erzeugt, bei welchem in Abhängigkeit des Abstandes das Verhältnis von dissonanten und konsonanten Tönen verändert wird.

So ist es in einer bevorzugten Ausführungsvariante vorgesehen, den Abstand bis zum Stopppunkt in Teilabschnitte zu unterteilen. Das Durchfahren eines jeden Abschnittes wird mit einem vordefinierten Signalton markiert. Ein anderer, vordefinierter Ton kennzeichnet den Stopppunkt. Dieser Ton wird in Abhängigkeit von der Einparkgeschwindigkeit und der Reaktionszeit des Fahrers schon vor dem Erreichen des Stopppunktes ausgegeben. Dabei wird, um das Halten des Fahrzeuges durch den Fahrer am Stopppunkt zu erreichen, das Signal für den Stopppunkt, beispielsweise einem Fahrer mit hoher Einparkgeschwindigkeit und geringer Reaktionsgeschwindigkeit bereits weit vor dem Stopppunkt erteilt. Dahingegen wird einem Fahrer mit hoher Reaktionsgeschwindigkeit und niedriger Einparkgeschwindigkeit dieses Signal erst wesentlich später gegeben, so dass im Ergebnis alle Fahrer nahezu den gleichen Stopppunkt erreichen, welcher das Einfahren des Fahrzeuges auf der vorberechneten Soll-Trajektorie (beispielsweise ein Umlenkpunkt) ermöglicht.

In einer bevorzugten Ausführungsvariante wird der Fahrzeuglenkwinkel mittels eines Fahrzeuglenkwinkelgebers bestimmt.

In einer weiteren bevorzugten Ausführungsvariante ist es vorgesehen, die Soll-Lenkrichtung nach rechts in Bezug auf die Längsachse des Fahrzeuges durch akustische Signale darzustellen, welche aus einem in der rechten Fahrzeughälfte in Bezug auf die Längsachse des Fahrzeuges angeordneten Lautsprecher oder akustischen Sender stammen. Analog ist es vorgesehen, die Soll-Lenkrichtung nach links in Bezug auf die Fahrzeugachse des Fahrzeuges durch akustische Signale darzustellen, welche aus einem in der linken Fahrzeughälfte angeordneten Lautsprecher oder akustischen Sender stammen. Dabei können insbesondere der Takt, die Lautstärke und/oder die Tonhöhe der akustischen Signale in Abhängigkeit von tatsächlichem Lenkwinkel und errechnetem Soll-Lenkwinkel der Einparktrajektorie variiert werden.

In einer alternativen Ausführungsvariante können die Signale zur Kennzeichnung der Lenkrichtung und des verbleibenden Abstandes zum nächsten Haltepunkt des Fahrzeuges optisch dargestellt werden. Dies wird vorzugsweise in einem für den Fahrer gut sichtbaren Display realisiert. Dabei wird vorzugsweise die aktuelle Position des Fahrzeuges in Bezug auf die gesamte Einparktrajektorie dargestellt. Vorzugsweise werden sämtliche Stopppunkte in der Einparktrajektorie gekennzeichnet, so dass der Fahrer den Abstand bis zum jeweils nächsten Stopppunkt sehen kann.

Ebenfalls ist es vorgesehen, den aktuellen Soll-Lenkwinkel und Ist-Lenkwinkel optisch mittels eines Displays darzustellen. In dieser Form kann das Überfahren eines Stopppunktes durch Rückfahren kompensiert werden.

Steht im Fahrzeug keine optische Anzeige zur Verfügung, müssen neben der akustischen Vorgabe der Lateralposition (zur Kontrolle der Längsbewegung des Fahrzeuges) auch die Lenk- beziehungsweise Lenkwinkelinformationen akustisch vermittelt werden. Dabei wird das Hinführen bis zu einem Stopppunkt (Umlenkpunkt) wie vorbeschrieben realisiert. Erreicht der Fahrer den Umlenkpunkt, erfolgen Lenkhinweise. Die Tonausgabe kann über ein stereofähiges Audiosystem erfolgen. Eine Ausgabe über zwei eingebaute Lautsprecher kann ebenfalls vorgesehen sein. Falls der Lenkeinschlag nach rechts beziehungsweise links erfolgen soll, werden Töne aus dem rechten beziehungsweise linken Lautsprecher erzeugt. Ist die Abweichung zwischen dem Lenkwinkel des Fahrers und dem Soll-Lenkwinkel groß, kann in einer bevorzugten Ausführungsvariante ein Ton mit langsamem Takt erzeugt werden. Hierdurch wird der Fahrer aufgefordert, weiterzulenken. Nähert sich der Fahrer dem Soll-Lenkwinkel, wird der Takt erhöht. Erreicht er den Soll-Lenkwinkel, wird ein besonderes Tonsignal ausgegeben, um dies dem Fahrer mitzuteilen.

In einer alternativen Ausführungsvariante wird anstatt des Taktes die Lautstärke des Signaltones verändert. Ist die Abweichung zwischen dem Lenkwinkel des Fahrers und dem Soll-Lenkwinkel groß, wird ein Ton einer bestimmten Lautstärke ausgegeben. Um den Ton verschwinden zu lassen, soll der Fahrer in die richtige Richtung lenken. Nähert sich der Fahrer dem Soll-Lenkwinkel, so wird auch der Ton leiser. Erreicht er den Soll-Lenkwinkel, verschwindet der Signalton. Auf diesem Wege kann der Fahrer zum Soll-Lenkwinkel hingeführt werden.

In einer weiteren bevorzugten Ausführungsvariante kann das Signal zur Kennzeichnung des Lenkwinkels auch durch Änderung der Tonhöhe (Frequenz) oder mittels Panning (Links-Rechts-Verschieben des Sounds) dargestellt werden. Weiterhin ist es möglich, in Surround-Soundsysteme nicht nur die Soll-Lenkrichtung, sondern auch den Soll-Lenkwinkel mit der spürbaren Schallrichtung zu koppeln.

Der erfindungsgemäße Parkassistent zum Bereitstellen von Informationen zum Parallel-Einparken eines Fahrzeuges mit Mitteln zur Bestimmung von Größe und Lage einer Parklücke, Mitteln zur Bestimmung der Fahrzeugposition relativ zur Parklücke, Mitteln zur Berechnung der Soll-Einparktrajektorie sowie Mitteln zur Erzeugung akustischer Signale zur Kennzeichnung des verbleibenden Abstandes zum nächsten Haltepunkt des Fahrzeuges weist Mittel zur Bestimmung der Fahrzeuggeschwindigkeit und Mittel zur Bestimmung der Reaktionszeit des Fahrzeugführers auf vorhergehende Signale auf.

In einer bevorzugten Ausführungsvariante weist der erfindungsgemäße Parkassistent zusätzlich Mittel zur Bestimmung des Fahrzeuglenkwinkels, Mittel zur Berechnung des Soll-Lenkwinkels und Mittel zur Erzeugung akustischer und/oder optischer Signale zur Kennzeichnung der Lenkrichtung auf. Dabei ist das Mittel zur Erzeugung akustischer Signale zur Kennzeichnung des verbleibenden Abstandes zum nächsten Haltepunkt des Fahrzeuges mit dem Mittel zur Bestimmung der Fahrzeuggeschwindigkeit und dem Mittel zur Bestimmung der Reaktionszeit des Fahrzeugführers auf vorhergehende Signale verbunden.

### Kurze Beschreibung der Zeichnungen

Die Erfindung wird nachstehend in Ausführungsbeispielen anhand der beigefügten Zeichnungen näher erläutert. Es zeigen in rein schematischen Darstellungen:
Fig. 1 die optische Darstellung der aktuellen Position des Fahrzeuges in Bezug auf die Soll-Einparktrajektorie und daneben die aktuelle Lenkwinkelsituation
   a) zu Beginn eines Einparkvorganges;
   b) an einem ersten Umlenkpunkt vor einer erfolgten Korrektur der Lenkrichtung und
   c) an einem ersten Umlenkpunkt nach erfolgter Korrektur der Lenkrichtung und
Fig. 2 eine optische Darstellung von Signalen zur Unterstützung eines Einparkvorganges
   a) zum Lenken;
   b) zum Anhalten und
   c) zum Anfahren des Fahrzeuges.

### Bester Weg zur Ausführung der Erfindung

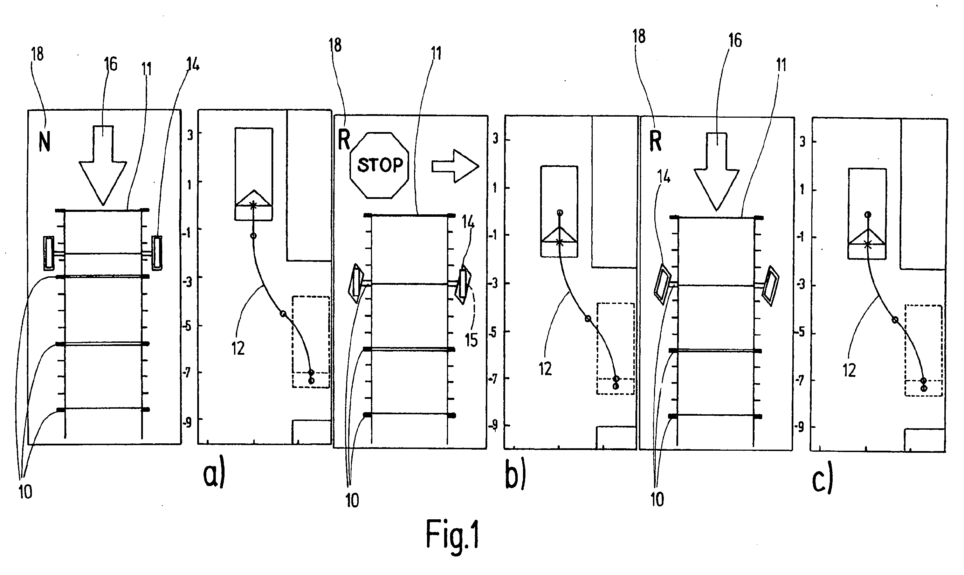

In Fig. 1a zeigt die optische Darstellung der aktuellen Position des Fahrzeuges in Bezug auf die Soll-Einparktrajektorie 12 zu Beginn eines Einparkvorganges nach dem erfindungsgemäßen Verfahren. Dabei ist die Vorderachse 11 des einparkenden Fahrzeuges zu Beginn des Einparkvorganges in Relation zur Soll-Trajektorie 12 dargestellt. Die Soll-Trajektorie 12 besteht aus einer Vielzahl von Unterabschnitten, welche für ein vollständiges Einparken vom Fahrer durchfahren werden müssen. Weiterhin sind seitlich die Umlenkpunkte 10 gekennzeichnet, zu welchen der Fahrer zum Einparken das Fahrzeug stoppen und die Fahrtrichtung entsprechend ändern muss. Als weitere Information wird dem Fahrer die zu fahrende Längsrichtung 16, im Fall von Fig. 1a ist dies die rückwärtige Richtung, dargestellt. Kurz bevor der Fahrer durch Rückwärtsfahren mit der Vorderachse 11 des Fahrzeuges den ersten Umlenkpunkt 10 erreicht (Fig. 1b), wird ihm optisch und/oder akustisch ein Signal übermittelt, welches den Fahrer zum Anhalten des Fahrzeuges bewegen soll. Erfindungsgemäß wird dieses Signal unter Berücksichtigung der Fahrzeuggeschwindigkeit und (sofern bereits vorhanden) unter Berücksichtigung der Reaktionszeit des Fahrers auf vorhergehende Signale berechnet, so dass das Fahrzeug trotz unterschiedlicher Einfahrgeschwindigkeiten und Reaktionsgeschwindigkeiten stets am ersten Umlenkpunkt 10 zum Halten kommt. Um nun eine Änderung des Ist-Lenkwinkels 14 zu realisieren, wird dem Fahrer der neue Soll-Lenkwinkel 15 optisch angezeigt. Alternativ kann eine Anzeige auch akustisch erfolgen. Als weitere Information wird dem Fahrer der stets aktuell eingelegte Gang 18 (N = Leerlauf; R = Rückwärts) angezeigt. Nach Erreichen des Soll-Lenkwinkels 15 (Ist-Lenkwinkel 14 stimmt mit dem Soll-Lenkwinkel 15 überein) (Fig. 1c kann nun die Längsbewegung des Fahrzeuges fortgesetzt werden.

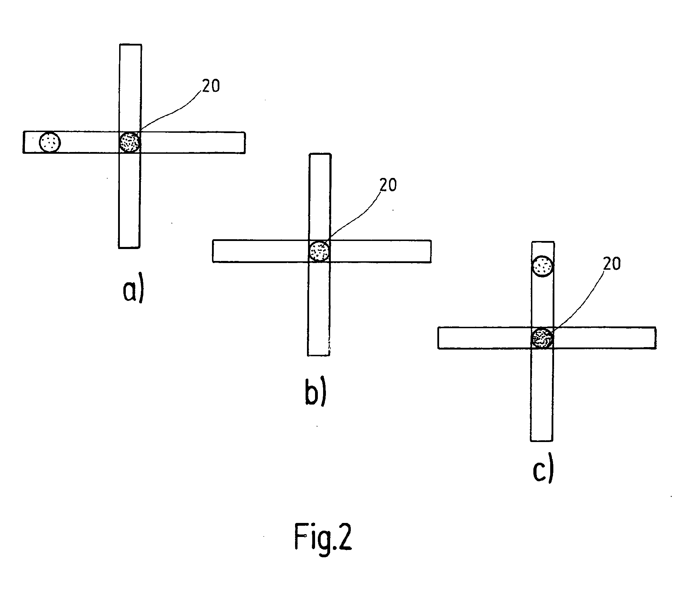

In Fig. 2 ist eine alternative optische Ausgestaltung der Erfindung wiedergegeben. Dabei wird ein außerhalb des Kreuzungspunktes 20 liegendes optisches Signal zur Anzeige der beziehungsweise der Fahrtrichtung erzeugt.

Dabei bedeutet ein optisches Signal links vom Kreuzungspunkt 20 (Fig. 2a), dass der Fahrer nach links lenken soll. Ein lediglich im Kreuzungspunkt 20 angeordnetes optisches Signal (Fig. 2b) bedeutet, dass der Fahrer das Fahrzeug anhalten soll. Ein über dem Kreuzungspunkt 20 angeordnetes optisches Signal (Fig. 2c) bedeutet, dass das Fahrzeug in Vorwärtsrichtung bewegt werden soll. Erfindungsgemäß werden diese Signale in Abhängigkeit der Einfahr- oder Einparkgeschwindigkeit des Fahrzeuges sowie der Reaktionszeit beziehungsweise Reaktionsgeschwindigkeit des Fahrers auf vorhergehende Signale erzeugt, so dass die Vorgaben des Parkassistenten (Fahren, Anhalten und Lenken) bestmöglich eingehalten werden können.

## Patentansprüche

1. Verfahren zum Bereitstellen von Informationen zum Parallel-Einparken eines Fahrzeuges in Bezug auf die Fahrbahn durch Bestimmen von Größe und Lage einer Parklücke, Bestimmen der Fahrzeugposition relativ zur Parklücke, Berechnen einer Soll-Trajektorie sowie Erzeugung von Signalen zur Kennzeichnung des verbleibenden Abstandes zum nächsten Haltepunkt des Fahrzeuges, **dadurch gekennzeichnet, dass**
die Fahrzeuggeschwindigkeit und/oder die Reaktionszeit des Fahrzeugführers bezüglich vorhergehender Signale ermittelt wird und in deren Abhängigkeit das Signal oder die Signale zur Kennzeichnung des verbleibenden Abstandes zum nächsten Haltepunkt des Fahrzeuges erzeugt werden.

2. Verfahren nach Anspruch 1, **dadurch gekennzeichnet, das** der Fahrzeuglenkwinkel bestimmt und mit dem errechneten Soll-Lenkwinkel (15) der Soll-Trajektorie (12) verglichen wird und bei Abweichung akustische und/oder optische Signale zur Kennzeichnung der Lenkrichtung erzeugt werden, wobei das Signal oder die Signale zur Kennzeichnung der Lenkrichtung in Abhängigkeit der Fahrzeuggeschwindigkeit und der Reaktionszeit des Fahrzeugführers erzeugt werden.

3. Verfahren nach Anspruch 1 oder 2, **dadurch gekennzeichnet, dass** als Signal zur Kennzeichnung des verbleibenden Abstandes zum nächsten Haltepunkt des Fahrzeuges eine abstandsabhängige Tonfolge, ein Tonsignal mit abstandsabhängiger Frequenz oder ein Tonsignal mit abstandsabhängigem Puls erzeugt wird.

4. Verfahren nach Anspruch 1 oder 2, **dadurch gekennzeichnet, dass** als Signal zur Kennzeichnung des verbleibenden Abstandes zum nächsten Haltepunkt des Fahrzeuges ein Tonsignal erzeugt wird, bei welchem in Abhängigkeit des Abstandes das Verhältnis von dissonanten und konsonanten Tönen verändert wird.

5. Verfahren nach einem der vorhergehenden Ansprüche, **dadurch gekennzeichnet, dass** der Fahrzeuglenkwinkel mittels eines Fahrzeuglenkwinkelgebers bestimmt wird.

6. Verfahren nach einem der vorhergehenden Ansprüche, **dadurch gekennzeichnet, dass** die Soll-Lenkrichtung nach rechts in Bezug auf die Längsachse des Fahrzeugs durch akustische Signale dargestellt wird, welche aus einem in der rechten Fahrzeughälfte in Bezug auf die Längsachse des Fahrzeugs angeordneten Lautsprecher stammen.

7. Verfahren nach einem der vorhergehenden Ansprüche, **dadurch gekennzeichnet, dass** die Soll-Lenkrichtung nach links in Bezug auf die Längsachse des Fahrzeugs durch akustische Signale dargestellt wird, welche aus einem in der linken Fahrzeughälfte in Bezug auf die Längsachse des Fahrzeugs angeordneten Lautsprecher stammen.

8. Verfahren nach einem der Ansprüche 6 oder 7, **dadurch gekennzeichnet, dass** der Takt, die Lautstärke und/oder die Tonhöhe der akustischen Signale in Abhängigkeit von tatsächlichem Lenkwinkel und errechnetem Soll-Lenkwinkel (15) der Einparktrajektorie variiert werden.

9. Verfahren nach einem der Ansprüche 1 bis 5, **dadurch gekennzeichnet, dass** die Soll-Lenkrichtung mittels Links-Rechts-Verschieben der akustischen Signale mehrerer Lautsprecher, welche sich sowohl in der rechten Fahrzeughälfte als auch in der linken Fahrzeughälfte befinden, dargestellt wird.

10. Verfahren nach einem der vorhergehenden Ansprüche, **dadurch gekennzeichnet, dass** akustische Signale mittels eines Surround-Systems erzeugt werden, wobei der Soll-Lenkwinkel (15) der spürbaren Schallrichtung entspricht.

11. Verfahren nach einem der vorhergehenden Ansprüche, **dadurch gekennzeichnet, dass** die aktuelle Position des Fahrzeugs auf einem Display in Bezug auf die Soll-Trajektorie (12) dargestellt wird.

12. Verfahren nach Anspruch 11, **dadurch gekennzeichnet, dass** der Stopppunkt oder die Stopppunkte in Bezug auf die Soll-Trajektorie (12) dargestellt werden.

13. Verfahren nach Anspruch 11 oder 12, **dadurch gekennzeichnet, dass** der Fahrzeuglenkwinkel und der Soll-Lenkwinkel (15) dargestellt werden.

14. Parkassistent zum Bereitstellen von Informationen zum Parallel-Einparken eines Fahrzeuges mit Mitteln zur Bestimmung von Größe und Lage einer Parklücke, Mitteln zur Bestimmung der Fahrzeugposition relativ zur Parklücke, Mitteln zur Berechnung der Soll-Einparktrajektorie sowie Mitteln zur Erzeugung akustischer Signale zur Kennzeichnung des verbleibenden Abstandes zum nächsten Haltepunkt des Fahrzeuges,
**gekennzeichnet durch**
Mittel zur Bestimmung der Fahrzeuggeschwindigkeit und/oder Mittel zur Messung der Reaktionszeit des Fahrzeugführers auf vorhergehende Signale und Mittel zur Signalerzeugung zur Kennzeichnung des verbleibenden Abstandes zum nächsten Haltepunkt des Fahrzeuges in Abhängigkeit von der Fahrzeuggeschwiridigkeit und/oder der Reaktionszeit"des Fahrzeugführers bezüglich vorhergehender Signale.

15. Parkassistent nach Anspruch 14,
**dadurch gekennzeichnet, dass**
der Parkassistent Mittel zur Bestimmung des Fahrzeuglenkwinkels, Mittel zur Berechnung des Soll-Lenkwinkels (15) und Mittel zur Erzeugung akustischer und/oder optischer Signale zur Kennzeichnung der Lenkrichtung aufweist.

16. Parkassistent nach Anspruch 14 oder 15,
**dadurch gekennzeichnet, dass**
das Mittel zur Erzeugung akustischer Signale zur Kennzeichnung des verbleibenden Abstandes zum nächsten Haltepunkt des Fahrzeuges mit dem Mittel zur Bestimmung der Fahrzeuggeschwindigkeit und dem Mittel zur Bestimmung der Reaktionszeit des Fahrzeugführers auf vorhergehende Signale verbunden ist.

## Claims

1. Method for providing information for the parallel parking of a vehicle with respect to the carriageway by determining the size and position of a parking space, determining the position of the vehicle in relation to the parking space and calculating a setpoint trajectory as well as generating signals for characterizing the remaining distance from the next stopping point of the vehicle,
**characterized in that**
the speed of the vehicle and/or the reaction time of the driver of the vehicle with respect to preceding signals is determined and as a function thereof the signal or signals are generated for characterizing the remaining distance from the next stopping point of the vehicle.

2. Method according to Claim 1, **characterized in that** the vehicle steering angle is determined and is compared with the calculated setpoint steering angle (15) of the setpoint trajectory (12), and when there is a deviation, acoustic and/or optical signals for characterizing the steering direction are generated, wherein the signal or the signals for characterizing the steering direction are generated as function of the speed of the vehicle and the reaction time of the driver of the vehicle.

3. Method according to Claim 1 or 2, **characterized in that** a distance-dependent sound sequence, a sound signal with distance-dependent frequency or a sound signal with distance-dependent pulse are generated as signals for characterizing the remaining distance from the next stopping point of the vehicle.

4. Method according to Claim 1 or 2, **characterized in that** a sound signal is generated as a signal for characterizing the remaining distance from the next stopping point of the vehicle, in which sound signal the ratio of the dissonant and constant sounds is changed as a function of the distance.

5. Method according to one of the preceding claims, **characterized in that** the vehicle steering angle is determined by means of a vehicle steering angle generator.

6. Method according to one of the preceding claims, **characterized in that** the setpoint steering direction to the right with respect to the longitudinal axis of the vehicle is represented by acoustic signals which originate from a loudspeaker which is arranged in the right-hand half of the vehicle with respect to the longitudinal axis of the vehicle.

7. Method according to one of the preceding claims, **characterized in that** the setpoint steering direction to the left with respect to the longitudinal axis of the vehicle is represented by acoustic signals which originate from a loudspeaker which is arranged in the left-hand half of the vehicle with respect to the longitudinal axis of the vehicle.

8. Method according to either of Claims 6 or 7, **characterized in that** the timing, the volume and/or the pitch of the acoustic signals are/is varied as a function of the actual steering angle and the calculated setpoint steering angle (15) of the parking trajectory.

9. Method according to one of Claims 1 to 5, **characterized in that** the setpoint steering direction is represented by means of left/right displacement of the acoustic signals of a plurality of loudspeakers which are located both in the right-hand half of the vehicle and in the left-hand half of the vehicle.

10. Method according to one of the preceding claims, **characterized in that** acoustic signals are generated by means of a surround system, wherein the setpoint steering angle (15) corresponds to the perceptible direction of sound.

11. Method according to one of the preceding claims, **characterized in that** the current position of the vehicle with respect to the setpoint trajectory (12) is represented on a display.

12. Method according to Claim 11, **characterized in that** the stopping point or the stopping points with respect to the setpoint trajectory (12) is/are represented.

13. Method according to Claim 11 or 12, **characterized in that** the vehicle steering angle and the setpoint steering angle (15) are represented.

14. Parking assistant for making available information for the parallel parking of a vehicle with means for determining the size and position of a parking space, means for determining the position of the vehicle in relation to the parking space, means for calculating the setpoint parking trajectory and means for generating acoustic signals for characterizing the remaining distance from the next stopping point of the vehicle,
**characterized by**
means for determining the speed of the vehicle and/or means for measuring the reaction time of the driver of the vehicle to previous signals, and means for generating signals for characterizing the remaining distance from the next stopping point of the vehicle as a function of the speed of the vehicle and/or the reaction time of the driver of the vehicle with respect to previous signals.

15. Parking assistant according to Claim 14,
**characterized in that**
the parking assistant has means for determining the vehicle steering angle, means for calculating the setpoint steering angle (15) and means for generating acoustic and/or optical signals for characterizing the steering direction.

16. Parking assistant according to Claim 14 or 15,
**characterized in that**
the means for generating acoustic signals for characterizing the remaining distance from the next stopping point of the vehicle is connected to the means for determining the speed of the vehicle and the means for determining the reaction time of the driver of the vehicle to previous signals.

## Revendications

1. Procédé destiné à délivrer des informations de manoeuvre de stationnement d'un véhicule parallèlement à la chaussée,
en déterminant la taille et la position d'un emplacement de stationnement,
en déterminant la position du véhicule par rapport à l'emplacement de stationnement,
en calculant une trajectoire de consigne et
en formant des signaux qui caractérisent la distance résiduelle jusqu'au point de maintien suivant du véhicule,
**caractérisé en ce que**
la vitesse du véhicule et/ou le temps de réaction du conducteur du véhicule à des signaux antérieurs sont déterminés et
**en ce que** le signal ou les signaux qui caractérisent la distance résiduelle par rapport au point de maintien suivant du véhicule sont formés en fonction de ces paramètres.

2. Procédé selon la revendication 1, **caractérisé en ce que** l'angle de direction du véhicule est déterminé et est comparé à l'angle de direction de consigne (15) calculé de la trajectoire de consigne (12) et **en ce qu'**en cas d'écart, des signaux acoustiques et/ou visuels sont délivrés pour caractériser la direction de conduite, le signal ou les signaux qui caractérisent la direction de conduite étant formés en fonction de la vitesse du véhicule et du temps de réaction du conducteur du véhicule.

3. Procédé selon les revendications 1 ou 2, **caractérisé en ce qu'**une succession de tonalités dépendant de la distance, un signal de tonalité dont la fréquence dépend de la distance ou un signal de tonalité dont les impulsions dépendent de la distance sont formés comme signaux caractérisant la distance résiduelle jusqu'au point de maintien suivant du véhicule.

4. Procédé selon les revendications 1 ou 2, **caractérisé en ce qu'**un signal de tonalité dont le rapport entre les tonalités dissonantes et les tonalités consonantes est modifié en fonction de la distance est formé comme signal caractérisant la distance résiduelle jusqu'au point de maintien suivant du véhicule.

5. Procédé selon l'une des revendications précédentes, **caractérisé en ce que** l'angle de direction du véhicule est déterminé au moyen d'un détecteur d'angle de direction du véhicule.

6. Procédé selon l'une des revendications précédentes, **caractérisé en ce que** la direction de conduite de consigne vers la droite de l'axe longitudinal du véhicule est représentée par des signaux acoustiques qui proviennent d'un haut-parleur disposé dans la moitié droite du véhicule par rapport à l'axe longitudinal du véhicule.

7. Procédé selon l'une des revendications précédentes, **caractérisé en ce que** la direction de conduite de consigne vers la gauche de l'axe longitudinal du véhicule est représentée par des signaux acoustiques qui proviennent d'un haut-parleur disposé dans la moitié gauche du véhicule par rapport à l'axe longitudinal du véhicule.

8. Procédé selon l'une des revendications 6 ou 7, **caractérisé en ce que** la cadence, l'intensité et/ou la hauteur de la tonalité des signaux acoustiques sont modifiées en fonction de l'angle de direction effectif et de l'angle de direction de consigne calculé (15) de la trajectoire de stationnement.

9. Procédé selon l'une des revendications 1 à 5, **caractérisé en ce que** la direction de conduite de consigne est représentée au moyen d'un déplacement gauche-droite des signaux acoustiques de plusieurs haut-parleurs situés dans la moitié droite du véhicule et dans la moitié gauche du véhicule.

10. Procédé selon l'une des revendications précédentes, **caractérisé en ce que** les signaux acoustiques sont formés par un système dit "surround", l'angle de direction de consigne (15) correspondant à la direction détectée du son.

11. Procédé selon l'une des revendications précédentes, **caractérisé en ce que** la position effective du véhicule par rapport à la trajectoire de consigne (12) est représentée sur un affichage.

12. Procédé selon la revendication 11, **caractérisé en ce que** le ou les points d'arrêt sont affichés par rapport à la trajectoire de consigne (12).

13. Procédé selon les revendications 11 ou 12, **caractérisé en ce que** l'angle de direction du véhicule et l'angle de direction de consigne (15) sont affichés.

14. Système d'assistance au stationnement qui délivre des informations en vue du stationnement d'un véhicule parallèlement à la chaussée, et présentant :
des moyens de détermination de la taille et de la position d'un emplacement de stationnement,
des moyens de détermination de la position du véhicule par rapport à l'emplacement de stationnement,
des moyens de calcul de la trajectoire de consigne de stationnement ainsi que
des moyens qui forment des signaux acoustiques qui caractérisent la distance résiduelle jusqu'au point de maintien suivant du véhicule,
**caractérisé par**
des moyens qui déterminent la vitesse du véhicule et/ou
des moyens qui mesurent le temps de réaction du conducteur du véhicule à des signaux antérieurs, ainsi que
des moyens qui forment des signaux qui caractérisent la distance résiduelle jusqu'au point de maintien suivant du véhicule en fonction de la vitesse du véhicule et/ou du temps de réaction du conducteur du véhicule aux signaux antérieurs.

15. Système d'assistance au stationnement selon la revendication 14, **caractérisé en ce que** le système d'assistance au stationnement présente des moyens de détermination de l'angle de direction du véhicule, des moyens de calcul de l'angle de direction de consigne (15) et des moyens qui forment des signaux acoustiques et/ou visuels pour caractériser la direction de conduite.

16. Système d'assistance au stationnement selon les revendications 14 ou 15, **caractérisé en ce que** les moyens de formation de signaux acoustiques en vue de caractériser la distance résiduelle jusqu'au point de maintien suivant du véhicule sont reliés aux moyens de détermination de la vitesse du véhicule et aux moyens de détermination du temps de réaction du conducteur du véhicule à des signaux antérieurs.
